# EUROPÄISCHE PATENTANMELDUNG

(11) **EP 0 718 505 A1**
(43) Veröffentlichungstag der Anmeldung: **26.06.1996**
(21) Anmeldenummer: 95116464.9
(22) Anmeldetag: 19.10.1995
(51) Int. Cl.: F16B 7/04, F16B 7/02

(54) **Doppelverbinder**

(30) Priorität: 22.12.1994 DE 4445907
(71) Anmelder: fischerwerke Artur Fischer GmbH & Co. KG, D-72178 Waldachtal (DE)
(72) Erfinder: Fischer, Artur, Prof. Dr. h.c. Dr.-Ing. E.h., D-72178 Waldachtal (DE)

(57) **Zusammenfassung**

Es wird ein Doppelverbinder bestehend aus einem Schaft (1) mit zwei in Achsrichtung im Abstand zueinander angeordneten Spreizbereichen (2,3) vorgeschlagen. Zur zugsicheren Verbindung von vorzugsweise Rohrprofilen (14) und einer einfachen Montage ist wenigstens ein Spreizbereich (3) durch eine zum Stirnende (19) des Schaftes (1) eine ansteigende Grundfläche (20) aufweisende Längsnut (15) mit in der Längsnut eingesetztem Keil (16) ausgebildet. Der Keil (16) ist über ein Federelement (17) auf der Grundfläche (20) in Richtung Stirnende des Schaftes soweit verschiebbar, daß die Außenfläche des Keils (16) den Schaft (1) überragt.

## Beschreibung

Die Erfindung betrifft einen Doppelverbinder, insbesondere zur fluchtenden Verbindung zweier Rohrprofile , gemäß der Gattung des Anspruches 1.

Aus der DE-PS 1 625 393 ist eine Steckverbindung für Platten bekannt, die aus zwei miteinander verrastbaren und in miteinander fluchtenden Bohrungen der zu verbindenden Platten festsetzbaren Verbindungselementen besteht. Die Festsetzung der Verbindungselemente erfolgt über Befestigungszapfen, deren Mantelflächen mit einem Sägezahnprofil versehen sind. Der Befestigungszapfen wird in das Bohrloch der Platte eingedrückt und hält in der Platte aufgrund des Reibschlußes zwischen dem Befestigungszapfen und der Bohrlochwandung.

Eine solche Verbindung ist im Stahlbau, insbesondere zur fluchtenden Verbindung zweier Rohrprofile nicht mehr ausreichend, da die auf der elastischen und plastischen Verformung des Sägezahnprofiles beruhende Haltekraft in einem Stahlteil nur eine geringe Aufnahme von Zugkräften erlaubt. Desweiteren ist auch die Montage eines solchen Doppelverbinders sehr ungünstig, da beim Einschlagen der Spreizbereiche eine Verformung des Sägezahnprofils erforderlich ist. Derartige Doppelverbinder bestehen daher zur Vermeidung einer Beschädigung der miteinander zu verbindenden Teile aus einem weicheren Werkstoff als die zu verbindenden Teile.

Der Erfindung liegt die Aufgabe zugrunde, einen Doppelverbinder für die Anwendung im Stahlbau, insbesondere zur fluchtenden Verbindung zweier Rohrprofile zu schaffen, der eine leichte Montage und die Aufnahme von hohen Zugkräften ermöglicht.

Die Lösung dieser Aufgabe wird durch die im Anspruch 1 angegebenen Merkmale erreicht. Zur Herstellung der Verbindung wird zunächst der eine Spreizbereich des Doppelverbinders in die Bohrung eines Stahlteiles soweit eingetrieben, bis der Spreizbereich sich vollständig in dem Stahlteil befindet und dort verankert ist. Auf den anderen das Stahlteil überragenden Spreizbereich wird nunmehr das weitere Stahlteil, beispielsweise ein Rohrprofil, aufgeschlagen. Beim Aufschlagen wird der in der Längsnut geführte Keil gegen den Druck des Federelementes auf der zum Stirnende des Schaftes ansteigenden Grundfläche zwangsläufig soweit zurückgeschoben, daß die Außenfläche des Keils den Durchmesser des Schaftes nicht überragt. Nach dem Aufsitzen des einen Stahlteils auf dem anderen Stahlteil ist die Verbindung hergestellt. Durch das Federelement wird der Keil gegen die Innenfläche der Bohrung des Stahlteiles gedrückt, so daß eine den Reibschluß bewirkende Verkeilung stattfindet. Durch das Zurückgleiten des Keils beim Einschieben ist für die Montage nur eine geringe Einschlagenergie erforderlich. Kommt auf das aufgesetzte Stahlteil eine Zugspannung, verstärkt sich die Verkeilung durch die Verschiebung des Keils auf der zum Stirnende des Schaftes ansteigenden Grundfläche. Durch die bei Zugspannung zunehmende Verkeilung ergibt sich eine stabile und hochfeste Verbindung der beiden Stahlteile. Der zuerst zu verankernde Spreizbereich des Doppelverbinders kann auch in herkömmlicher Weise in einem Bohrloch eines Betonbauteiles, beispielsweise für eine Balkonbefestigung, verankert sein.

In einer weiteren Ausgestaltung der Erfindung können die beiden Spreizbereiche gleich ausgebildet sein, wobei das Federelement des einen Spreizbereiches eine höhere Federkraft aufweist. Durch die höhere Federkraft des einen Spreizbereiches wird eine etwas höhere Reibkraft in einem Stahlteil erreicht, so daß beim Aufschieben des anderen Stahlteiles keine Verschiebung des Doppelverbinders beim Aufsetzen und Aufschieben des zweiten Stahlteiles erfolgt. Diese Ausgestaltung ist insbesondere dann zweckmäßig, wenn der Doppelverbinder zur fluchtenden Verbindung zweier Rohrprofile verwendet wird, die durchgehende Innenbohrungen aufweisen.

Um ein günstiges Gleitverhalten des Keils und damit einen hohen Reibschluß zu erreichen, kann der Keil in der Längsnut auf einer Gleitschicht aufsitzen.

Zur einfachen Montage ist es ferner zweckmäßig, am vorderen Ende des Keils eine Anlaufschräge anzuordnen.

Weiterhin kann ein Halteelement, beispielsweise ein Gummiring, Prägesicken oder dgl. den Keil verschiebbar in der Längsnut vor dem Eintreiben in das Bohrloch festhalten, damit der Keil nicht unbeabsichtigt aus der Längsnut herausfällt.

Der Schaft des Doppelverbinders ist zweckmäßigerweise aus Stahl hergestellt. Der Keil kann ebenfalls aus Stahl oder aus einem hochwertigen, schlagzähen Kunststoff hergestellt sein, wobei die Außenfläche des Keils mit einer zahnförmigen Aufrauhung versehen ist.

Bei der Verbindung zweier Rohrprofile ist es zweckmäßig, zwischen den beiden Spreizbereichen einen Anschlagbund anzuordnen, der als Einschiebbegrenzung für den zuerst verankernden Spreizbereich dient.

In der Zeichnung sind Ausführungsbeispiele der Erfindung dargestellt.

Es zeigen:
- Figur 1: den in einem Betonteil verankerten Doppelverbinder mit Rohrprofilanschluß,
- Figur 2: den Doppelverbinder zur fluchtenden Verbindung zweier Rohrprofile.

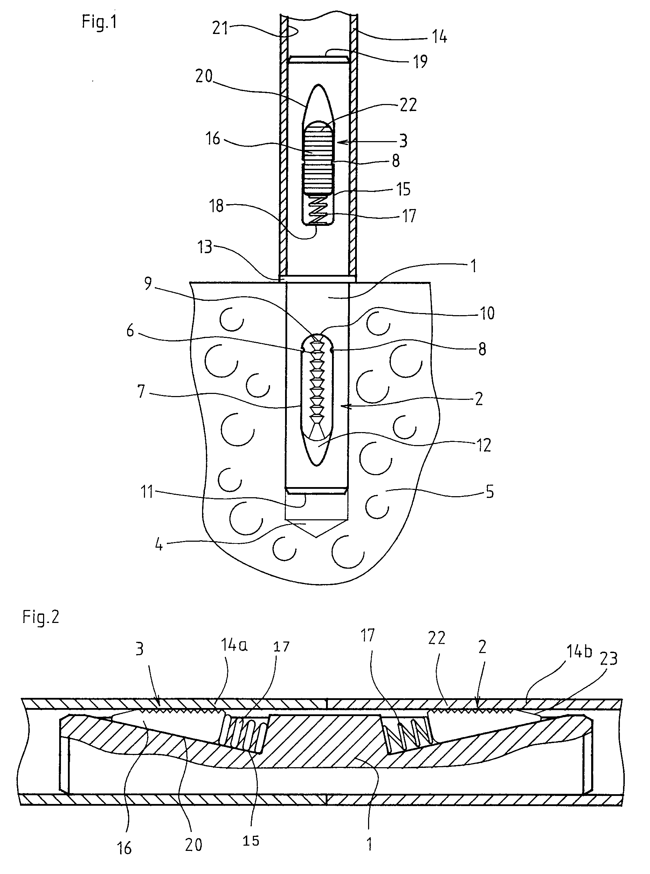

Der in Figur 1 dargestellte Doppelverbinder besteht aus dem Schaft 1, an dem zwei in Achsrichtung im Abstand zueinander angeordnete Spreizbereiche 2 und 3 angeordnet sind. Der in dem Bohrloch 4 des Betonteils 5 verankerte Spreizbereich 2 ist durch einen Keil 6 gebildet, der in einer Längsnut 7 geführt ist. Der in der Längsnut 7 leicht verschiebbare Keil 6 wirdd durch eine Halteelement 8 - im Ausführungsbeispiel Prägesicken - gehalten.

Der Keil 6 weist an seiner Außenfläche Zähne 9 auf, die im Querschnitt dachförmig ausgebildet sind. Beim Eintreiben des Spreizbereiches 2 in das Bohrloch 4 des Bauteiles 5 befindet sich der Keil 6 in der tiefsten Position, bei der die hintere Stirnseite 10 des Keils 6 an der als Anschlag dienenden Begrenzung der Längsnut 7 anliegt. In dieser Position überragen die Zähne 9 mit einem Teil ihrer Höhe den Schaft 1 des Doppelverbinders. Dadurch entsteht bereits nach dem Einschlagen eine Verankerung , die bei einer am Doppelverbinder angreifenden Zugkraft durch die axiale Verschiebung des Keils 6 auf der zum vorderen Stirnende 11 des Schaftes 1 ansteigenden Grundfläche 12 sich verstärkt.

Zur Begrenzung der Eintreibtiefe ist zwischen dem Spreizbereich 2 und 3 ein Anschlagbund 13 angeordnet. Auf den das Bauteil 5 überragenden Spreizbereich 3 wird nach der Verankerung in dem Bauteil 5 das Rohrprofil 14 aufgesteckt. Beim Aufschieben wird der beispielsweise aus Stahl oder hochwertigen Kunststoff bestehende und ebenfalls in einer Längsnut 15 geführte Keil 16 gegen den Federdruck des Federelementes 17 soweit in Richtung der Begrenzungskante 18 der Längsnut 15 zurückgeschoben, daß die Außenfläche des Keils 16 den Schaft 1 nicht mehr überragt. Nach dem Aufsitzen des Rohrprofils 14 auf dem Anschlagbund 13 wird der Keil 16 zwangsläufig von dem Federelement 17 über die zum Stirnende 19 ansteigende Grundfläche 20 vorgeschoben, so daß eine Verkeilung des Rohrprofiles 14 auf dem überstehenden Spreizbereich 3 erfolgt. Durch den Reibschluß der Innenwandung 21 des Rohrprofils 14 mit der Außenfläche des Keils 16 entsteht bei einer auf das Rohrprofil wirkenden Zugkraft eine zusätzliche Verkeilung, die eine sichere, Zugkräfte aufnehmende Verbindung ermöglicht. Zur Verbesserung des Reibschlußes kann die Außenfläche des Keils mit quer verlaufenden Zähnen 22 oder einer Aufrauhung versehen sein.

In Figur 2 ist ein Doppelverbinder zur fluchtenden Verbindung zweier Rohrprofile 14a, 14b dargestellt. Beide Spreizbereiche 2, 3 sind gleich ausgebildet, wobei einer der beiden Spreizbereiche ein Federelement 17 aufweist, dessen Federkraft etwas höher ist als die des anderen Federelementes. Zur Verbindung der beiden Rohrprofile wird zunächst der mit der höheren Federkraft ausgestattete Spreizbereich 3 zuerst in dem einen Rohrprofil 14a verankert. Durch die stärkere Verspannung des Keils 16 in diesem Rohrprofil läßt sich das zweite Rohrprofil 14b auf den anderen Spreizbereich 2 aufschieben, ohne daß sich der Schaft 1 in dem zuerst verkeilten Rohrprofil verschiebt. Als Federelemente 17 können Tellerfedern, Blattfedern oder wie im Ausführungsbeispiel dargestellt eine Schraubenfeder verwendet werden. Bestehen die Keile 16 ebenso wie der Schaft aus Stahl, ist es zweckmäßig, daß der Keil 16 auf der ansteigenden Grundfläche 20 der Längsnut 15 auf einer beispielsweise durch ein Kunststoffblättchen gebildeten Gleitschicht aufsitzt. Die Außenfläche des Keils 16 ist mit einer zahnförmigen Aufrauhung 22 und an seinem vorderen Ende mit einer Anlaufschräge 23 versehen.

## Patentansprüche

1. Doppelverbinder, insbesondere zur fluchtenden Verbindung zweier Rohrprofile, bestehend aus einem Schaft mit zwei in Achsrichtung im Abstand zueinander angeordneten Spreizbereichen, **dadurch gekennzeichnet,** daß wenigstens ein Spreizbereich (3) durch eine zum Stirnende (19) des Schaftes (1) eine ansteigende Grundfläche (20) aufweisende Längsnut (15) mit in der Längsnut eingesetztem Keil (16) gebildet ist, der über ein Federelement (17) auf der Grundfläche (20) in Richtung Stirnende (19) des Schaftes (1) soweit verschiebbar ist, daß die Außenfläche des Keils (16) den Schaft (1) überragt.

2. Doppelverbinder nach Anspruch 1, **dadurch gekennzeichnet**, daß beide Spreizbereiche (2,3) gleich ausgebildet sind, wobei das Federelement (17) des einen Spreizbereiches eine höhere Federkraft aufweist.

3. Doppelverbinder nach Anspruch 1, **dadurch gekennzeichnet**, daß der Keil (16) in der Längsnut (15) auf einer Gleitschicht aufsitzt.

4. Doppelverbinder nach Anspruch 1, **dadurch gekennzeichnet**, daß die Außenfläche des Keils (16) mit einer zahnförmigen Aufrauhung (22) versehen ist.

5. Doppelverbinder nach Anspruch 1, **dadurch gekennzeichnet,** daß am vorderen Ende des Keils (16) eine Anlaufschräge (23) angeordnet ist.

6. Doppelverbinder nach Anspruch 1, **dadurch gekennzeichnet,** daß an dem Keil (16) ein Halteelement (8) angreift, welches den Keil lösbar in der Längsnut (15) festhält.

7. Doppelverbinder nach Anspruch 1, **dadurch gekennzeichnet,** daß zwischen den beiden Spreizbereichen (2,3) ein Anschlagbund (13) angeordnet ist.

8. Doppelverbinder nach Anspruch 1, **dadurch gekennzeichnet**, daß der Schaft (1) aus Stahl und der Keil (16) aus einem schlagzähen Kunststoff hersgestellt ist.
